# EUROPEAN PATENT APPLICATION

(11) **EP 4 424 727 A1**
(43) Date of publication of application: **04.09.2024**
(21) Application number: 22887045.7
(22) Date of filing: 26.10.2022
(51) Int. Cl.: C08F 220/04, C08F 2/06, C08F 222/02, H01M 4/62

(54) **CROSSLINKED POLYMER OF ALPHA, BETA-UNSATURATED CARBOXYLIC ACID COMPOUND AND USE OF SAME**

(30) Priority: 27.10.2021 JP 2021175460
(71) Applicant: Sumitomo Seika Chemicals Co., Ltd., Kako-gun, Hyogo 675-0145 (JP)
(72) Inventor: CHUGO, Shohei, Himeji-shi, Hyogo 672-8076 (JP); NOGUCHI, Mari, Himeji-shi, Hyogo 672-8076 (JP); HAYASHI, Yoshiki, Himeji-shi, Hyogo 672-8076 (JP); NAKATSUKA, Akio, Himeji-shi, Hyogo 672-8076 (JP)
(74) Representative: Vossius & Partner Patentanwälte Rechtsanwälte mbB
(86) International application number: PCT/JP2022/039824
(87) International publication number: WO 2023/074720

(57) **Abstract**

Provided is a crosslinked polymer of an α,β-unsaturated carboxylic acid compound that maintains viscosity over a long period of time under strong alkaline conditions due to an alkaline electrolyte, that thus prevents the deterioration of the dispersibility of a cathode active material caused by the decreased viscosity, and that is also usable as a thickener for the electrodes for alkaline batteries. More specifically, provided is a polymer of an α,β-unsaturated carboxylic acid compound crosslinked by a crosslinking agent, wherein a 0.5 mass% neutralized aqueous solution of the crosslinked polymer at 25°C has a yield stress of 20 Pa or higher, and k is 1.5 to 3.0 wherein k represents an interaction coefficient as determined by measuring a neutralized aqueous solution of the crosslinked polymer having an initial concentration of 0.015 mass% with an Ubbelohde dilution viscometer.

## Description

### Technical Field

The present disclosure relates to a specific crosslinked polymer of an α,β-unsaturated carboxylic acid compound and the use of the crosslinked polymer.

### Background Art

A gelled alkaline electrolyte has been used in the cathode of alkaline batteries. Carboxymethylcellulose, crosslinked poly(meth)acrylic acid, and their salts are known as commonly used gelling agents. Due to their high viscosity, these gelling agents play a role in uniformly dispersing a cathode active material (e.g., zinc powder) and inhibiting sedimentation; thus, these gelling agents are necessary to achieve excellent battery performance. Additionally, there is a need to increase impact resistance to protect the interior against external shocks and to prevent incorporation of air bubbles *(awakami)* caused by agitation during gel preparation. To achieve these requirements, proposals have been made to improve the dispersibility and gel stability of a cathode active material by controlling the ejection properties and particle size, and to decrease air bubble incorporation by adding a polyhydric alcohol fatty acid ester to a gelling agent (PTL 1 and 2) .

### Citation List

### Patent Literature

PTL 1: JP2000-306589A
PTL 2: JP2011-249232A
PTL 3: Patent No. 4883844

### Summary of Invention

### Technical Problem

However, conventional technology is insufficient to maintain viscosity over a long period of time under strong alkaline conditions due to an alkaline electrolyte. The decrease in viscosity deteriorates the dispersibility of the cathode active material and causes the cathode active material, which has a large specific gravity, to settle in the electrode, thus reducing the discharge performance and life of the battery.

### Solution to Problem

The present inventors found that it could be possible to maintain viscosity over a long period of time under strong alkaline conditions due to an alkaline electrolyte and prevent the deterioration of the dispersibility of a cathode active material caused by decreased viscosity by using, as a thickener for electrodes, a polymer of an α,β-unsaturated carboxylic acid compound crosslinked by a crosslinking agent, wherein a 0.5 mass% neutralized aqueous solution of the crosslinked polymer at 25°C has a yield stress of 20 Pa or higher, and k is 1.5 or higher wherein k represents an interaction coefficient as determined by measuring a neutralized aqueous solution of the crosslinked polymer having an initial concentration of 0.015 mass% with an Ubbelohde dilution viscometer. The inventors conducted further research on the basis of this finding.

The present disclosure encompasses, for example, the subject matter described in the following items.

### Item 1.

A crosslinked polymer of an α,β-unsaturated carboxylic acid compound, the polymer being crosslinked by a crosslinking agent, wherein
a 0.5 mass% neutralized aqueous solution of the crosslinked polymer at 25°C has a yield stress of 20 Pa or higher, and
k is 1.5 to 3.0 wherein k represents an interaction coefficient as determined by measuring a neutralized aqueous solution of the crosslinked polymer having an initial concentration of 0.015 mass% with an Ubbelohde dilution viscometer.

### Item 2.

The crosslinked polymer according to Item 1 or 2, wherein the α,β-unsaturated carboxylic acid compound is at least one member selected from the group consisting of acrylic acid, methacrylic acid, crotonic acid, maleic acid, fumaric acid, itaconic acid, and salts thereof.

### Item 3.

The crosslinked polymer according to Item 1 or 2, wherein the crosslinking agent is a compound having two or more ethylenically unsaturated groups.

### Item 4.

The crosslinked polymer according to any one of Items 1 to 3, which is a polymer comprising 0.15 to 2 parts by mass of the crosslinking agent per 100 parts by mass of the α,β-unsaturated carboxylic acid compound.

### Item 5.

A binder for an electrode for an alkaline battery, the binder comprising the crosslinked polymer of any one of Items 1 to 4.

### Item 6.

The binder according to Item 5, wherein the electrode is a negative electrode.

### Item 7.

An electrode for an alkaline battery comprising the binder of Item 5 or 6.

### Item 8.

An alkaline battery comprising the electrode of Item 7. Item 9.

A method for producing a polymer of an α,β-unsaturated carboxylic acid compound crosslinked by a crosslinking agent, comprising reacting an α,β-unsaturated carboxylic acid compound and a compound having two or more ethylenically unsaturated groups in an inert solvent at 40 to 48°C in the presence of a radical polymerization catalyst,
wherein
the radical polymerization catalyst is present in an amount of 0.5 to 2 parts by mass per 100 parts by mass of the α,β-unsaturated carboxylic acid compound.

### Advantageous Effects of Invention

A crosslinked polymer of an α,β-unsaturated carboxylic acid compound is provided. The crosslinked polymer of an α,β-unsaturated carboxylic acid compound maintains viscosity over a long period of time under strong alkaline conditions due to an alkaline electrolyte, prevents the deterioration of the dispersibility of the cathode active material caused by the decreased viscosity, and is usable as a thickener for an electrode for an alkaline battery.

### Description of Embodiments

The following describes in more detail embodiments encompassed by the present disclosure. The disclosure preferably encompasses, but is not limited to, a crosslinked polymer of an α,β-unsaturated carboxylic acid compound (i.e., a polymer of an α,β-unsaturated carboxylic acid compound crosslinked by a crosslinking agent), a production method for the crosslinked polymer, use of the crosslinked polymer, a thickener for the electrodes for alkaline batteries using the crosslinked polymer, and an electrode or alkaline battery using the thickener. The disclosure encompasses all matter that is disclosed in the present specification and recognizable to those skilled in the art.

The crosslinked polymer of an α,β-unsaturated carboxylic acid compound (i.e., a polymer of an α,β-unsaturated carboxylic acid compound crosslinked by a crosslinking agent, which may sometimes be referred to as a "crosslinked α,β-unsaturated carboxylic acid compound polymer") encompassed by the present disclosure has an interaction coefficient (k) of 1.5 or higher (preferably 1.5 to 3.0) as determined by measuring a neutralized aqueous solution of the crosslinked polymer with an Ubbelohde dilution viscometer. The crosslinked polymer may sometimes be referred to as "the crosslinked polymer of the present disclosure."

The crosslinked polymer of the present disclosure is a polymer formed from an α,β-unsaturated carboxylic acid compound, as described above, and is crosslinked by a crosslinking agent. The crosslinked polymer is typically used as a hydrophilic thickener in the form of polymer particles. Adding these polymer particles to water or an aqueous solution containing water allows a particulate swollen gel to form, causing the aqueous solution to thicken. A hydrophilic thickener containing the crosslinked polymer of the present disclosure may sometimes be referred to as "the thickener of the present disclosure."

Examples of α,β-unsaturated carboxylic acid compounds include acrylic acid, methacrylic acid, crotonic acid, maleic acid, fumaric acid, itaconic acid, and salts thereof. Examples of the salts include sodium salts and potassium salts. Of these, (meth)acrylic acid (i.e., methacrylic acid and/or acrylic acid) and salts thereof are more preferred. These α,β-unsaturated carboxylic acid compounds may be used alone or in a combination of two or more.

The crosslinking agent is preferably a compound having two or more ethylenically unsaturated groups. More specifically, examples of crosslinking agents include acrylic acid esters with two or more substitutions of a polyol, such as ethylene glycol, diethylene glycol, propylene glycol, polyoxyethylene glycol, polyoxypropylene glycol, glycerin, polyglycerin, trimethylolpropane, pentaerythritol, saccharose, and sorbitol; methacrylic acid esters with two or more substitutions of these polyols; allyl ethers with two or more substitutions of these polyols; diallyl phthalate, triallyl phosphate, allyl methacrylate, tetraallyloxyethane, triallyl cyanurate, divinyl adipate, vinyl crotonate, 1,5-hexadiene, divinylbenzene, etc. Of these, pentaerythritol triallyl ether, pentaerythritol tetraallyl ether, diethylene glycol diallyl ether, and polyarylsaccharose are more preferred. These crosslinking agents may be used alone or in a combination of two or more.

The crosslinked polymer of the present disclosure is preferably a polymer comprising about 0.15 to 2 parts by mass of the crosslinking agent per 100 parts by mass of the α,β-unsaturated carboxylic acid compound. The upper or lower limit of the range (0.15 to 2 parts by mass) may be 0.2, 0.3, 0.4, 0.5, 0.6, 0.7, 0.8, 0.9, 1, 1.1, 1.2, 1.3, 1.4, 1.5, 1.6, 1.7, 1.8, or 1.9 parts by mass. For example, the range may be, for example, 0.4 to 1.5 parts by mass.

As described above, the crosslinked polymer of the present disclosure has an interaction coefficient (k) of 1.5 or higher (preferably 1.5 to 3.0) as determined by measuring a neutralized aqueous solution of the crosslinked polymer with an Ubbelohde dilution viscometer. More specifically, the crosslinked polymer of the present disclosure has an interaction coefficient (k) of 1.5 or higher (preferably 1.5 to 3.0) as determined by measuring a neutralized aqueous solution of the crosslinked polymer having an initial concentration of 0.015 mass% with an Ubbelohde dilution viscometer. The upper or lower limit of the range may be, for example, 1.6, 1.7, 1.8, 1.9, 2, 2.1, 2.2, 2.3, 2.4, 2.5, 2.6, 2.7, 2.8, or 2.9. The range may be, for example, 1.5 to 2.5.

Intrinsic viscosity [η] and interaction coefficient k of the crosslinked polymer solution are more specifically determined as follows. Specifically, flow time (t) of the solution and flow time (t₀) of the solvent alone are measured with an Ubbelohde dilution viscometer in accordance with JIS K-7367-1, and ηₛₚ is determined according to the following relational expression. ηₛₚ is a specific viscosity (indicating the rate of increase in viscosity caused by a solute in a solvent).
*η*ₛₚ = (*η*-*η*₀)/*η*₀ = (*ρ*t-*ρ*₀t₀) /*ρ*₀t₀ ≈ (t-t₀)/t₀ (*ρ*₀: solvent viscosity, t₀: solvent flow time, *ρ*: solution viscosity, t: solution flow time)

While the concentration is changed by dilution, measurement is performed at four or more points (e.g., 4, 5, or 6 points), and the results are plotted with concentration (c) on the horizontal axis and (ηₛₚ/c) on the vertical axis. Martin's equation ηₛₚ/c = [η] e^{k[η]c} with exponential approximation gives [η] and k. (Plotting the measured values gives exponential approximation in the Martin's equation. The intercept of the extrapolation of zero concentration is intrinsic viscosity [η].) Unless otherwise noted in the present specification, the unit for intrinsic viscosity [η] is dl/g.

The intrinsic viscosity [η] determined by measuring an aqueous solution of the crosslinked polymer of the present disclosure with an Ubbelohde dilution viscometer is preferably about 10 to 25. The upper or lower limit of the range may be, for example, 11, 12, 13, 14, 15, 16, 17, 18, 19, 20, 21, 22, 23, or 24. For example, the range may be 11 to 24.

Product k[η] of intrinsic viscosity [η] and interaction coefficient k is preferably about 18 to 37, and more preferably about 19 to 36 or 20 to 35.

As described above, a 0.5 mass% neutralized aqueous solution of the crosslinked polymer of the present disclosure at 25°C has a yield stress (yield value) of 20 Pa or higher, and preferably 20 to 200 Pa. The upper or lower limit of the preferable range may be, for example, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 60, 70, 80, 90, 100, 110, 120, 130, 140, 150, 160, 170, 180, or 190 Pa. For example, the range may be 21 to 150 Pa.

The yield stress is measured with a rheometer. For example, the yield stress is measured by using a dynamic viscoelasticity analyzer (AR-2000ex from TA Instruments Japan) with a 60-mm (diameter), 4-degree cone. More specifically, the steady-state flow viscosity at a shear stress of 1.0 × 10⁻⁵ to 1.0 × 10³ (Pa) is measured under steady-state conditions that satisfy the following three items: (1) percentage tolerance 1.0, (2) consecutive within tolerance 3, and (3) maximum point time 10 min. The point at which the strain changes abruptly with respect to shear stress is determined to be the yield value (yield stress, Pa).

The neutralized aqueous solution of the crosslinked polymer used for the measurement is a 0.5 mass% neutralized aqueous solution of the polymer, as described above. For example, the neutralized aqueous solution of the crosslinked polymer is prepared as follows. 288.8 g of ion-exchanged water is placed in a 500-mL beaker, and 1.5 g of a crosslinked polymer of an α,β-unsaturated carboxylic acid compound is gradually added with stirring at 1500 rpm with a dispersion mixer. After subsequent stirring for 30 minutes, the dispersion mixer is turned off, and 9.7 g of a 6 mass% aqueous sodium hydroxide solution is added and stirred with a handheld mixer for 30 seconds to obtain a 0.5 mass% neutralized aqueous solution of the crosslinked polymer.

An aqueous solution with a pH of 7 (measured with a pH meter at 25°C) is designated as a neutralized aqueous solution. A pH adjuster can be used for neutralization; for example, sodium hydroxide is suitable as described above. The same applies below.

A 0.5 mass% neutralized aqueous solution of the crosslinked polymer of the present disclosure preferably has a viscosity of 25000 to 65000 mPa·s as measured with a BH rotary viscometer. The upper or lower limit of the range may be, for example, 30000, 35000, 40000, 45000, 50000, 55000, or 60000 mPa·s. The range may be, for example, 30000 to 60000 mPa·s. The value of viscosity is the value measured after 60 seconds with a BH rotary viscometer at 20 rpm at a temperature of 25°C.

The crosslinked polymer of the present disclosure can be obtained by reacting an α,β-unsaturated carboxylic acid compound with a crosslinking agent in an inert solvent at a specific temperature in the presence of a radical polymerization catalyst.

The amount of the α,β-unsaturated carboxylic acid compound is, for example, preferably about 6 to 25 parts by volume, more preferably 8 to 20 parts by volume, and still more preferably 8 to 15 parts by volume, per 100 parts by volume of the inert solvent.

Examples of radical polymerization catalysts include, but are not particularly limited to, azobisisobutyronitrile, 2,2'-azobis-2,4-dimethylvaleronitrile, dimethyl-2,2'-azobisisobutyrate, benzoyl peroxide, lauroyl peroxide, cumene hydroperoxide, and tert-butyl hydroperoxide. These radical polymerization catalysts may be used alone or in a combination of two or more. In particular, 2,2'-azobis-2,4-dimethylvaleronitrile is preferably used from the viewpoint of its suitably exhibited catalytic activity at a reaction temperature. The amount of the radical polymerization catalyst is preferably about 0.5 to 2 parts by mass per 100 parts by mass of the α,β-unsaturated carboxylic acid compound. The upper or lower limit of the range may be, for example, 0.6, 0.7, 0.8, 0.9, 1, 1.1, 1.2, 1.3, 1.4, 1.5, 1.6, 1.7, 1.8, or 1.9 parts by mass. For example, the range may be 0.6 to 1.5 parts by mass. The reaction performed at relatively lower temperatures, described later, by using a radical polymerization catalyst in such an amount more preferably gives the crosslinked polymer of the present disclosure with an interaction coefficient (k) of 1.5 or higher (preferably 1.5 to 3.0) .

The inert solvent is a solvent that dissolves an α,β-unsaturated carboxylic acid compound and a crosslinking agent, but does not dissolve the resulting crosslinked polymer of the α,β-unsaturated carboxylic acid compound. More specifically, examples of such solvents include n-pentane, n-hexane, isohexane, n-heptane, n-octane, isooctane, cyclopentane, methylcyclopentane, cyclohexane, methylcyclohexane, benzene, toluene, xylene, chlorobenzene, ethylene dichloride, ethyl acetate, isopropyl acetate, methyl ethyl ketone, and methyl isobutyl ketone. These may be used alone or in a combination of two or more. In particular, n-hexane is preferred from the viewpoint of its suitably exhibited catalytic activity at a reaction temperature.

The atmosphere for the reaction is, for example, preferably an inert gas atmosphere such as nitrogen gas or an argon gas.

The reaction is performed at relatively lower temperatures than in conventional methods. The reaction performed at relatively lower temperatures than in conventional methods preferably gives the crosslinked polymer of the present disclosure with an interaction coefficient (k) of 1.5 or higher. For example, the reaction is preferably performed at about 40 to 48°C. The upper or lower limit of the temperature range may be, for example, 41, 42, 43, 44, 45, 46, or 47°C. For example, the temperature range may be 43 to 47°C. The reaction time can be set as appropriate, preferably to about 2 to 10 hours, and more preferably about 3 to 7 hours. Polymerization can preferably be performed, for example, by precipitation polymerization.

After the reaction is complete, the reaction solution can be heated to, for example, about 80 to 130°C to volatilize and remove the inert solvent. This gives a white fine powder of a crosslinked carboxyl group-containing polymer.

As described above, the crosslinked polymer of the present disclosure can preferably be used as a thickener (in particular, a hydrophilic thickener). The present disclosure also preferably encompasses thickeners containing the crosslinked polymer of the present disclosure. Because the crosslinked polymer of the present disclosure can maintain its viscosity for a relatively long period of time under strong alkaline conditions such as of alkaline electrolytes, the crosslinked polymer is, for example, particularly suitable for binders used in the electrodes of alkaline batteries (in particular, negative electrodes) under strong alkaline conditions. This is because the deterioration of the dispersibility of the negative-electrode active material caused by the decrease in viscosity can be prevented. The present disclosure also preferably encompasses binders containing the crosslinked polymer of the present disclosure (which may sometimes be referred to as "the binder of the present disclosure"). The binder of the present disclosure can particularly preferably be used as a binder for electrodes for alkaline batteries (in particular, negative electrodes). Examples of alkaline batteries include alkaline dry batteries and alkaline storage batteries.

The content of the crosslinked polymer of the present disclosure in the binder of the present disclosure can be determined as appropriate, and is, for example, 0.1 to 10 mass%, preferably 0.5 to 8 mass%, and more preferably 1 to 5 mass%.

When the binder of the present disclosure is used, in particular, as a binder for an electrode of an alkaline battery (negative electrode), the content of the crosslinked polymer of the present disclosure can be determined as appropriate; the content of the crosslinked polymer is, for example, about 0.5 to 3 mass%, and preferably about 1 to 2 mass%, based on the total amount of the electrode of the alkaline battery.

The present disclosure also encompasses electrodes of alkaline batteries comprising the binder of the present disclosure (in particular, negative electrodes) and alkaline batteries comprising such electrodes.

In the present specification, the term "comprising" also includes the concepts of "consisting essentially of" and "consisting of." The present disclosure also encompasses every combination of the technical elements described in the specification.

The various characteristics (properties, structures, functions, etc.) explained for each embodiment of the present disclosure described above may be combined in any way in identifying the subject matter encompassed by the present disclosure. In other words, the present disclosure encompasses all subject matter of every possible combination of the characteristics described in the present specification.

### Examples

The following describes in more detail embodiments of the present disclosure with reference to the following Examples. However, the embodiments of the present disclosure are not limited to these Examples.

### Production of Crosslinked Polymer Particles of α,β-unsaturated Carboxylic Acid Compound

### Example 1

A 500-mL round separable flask was prepared as a reaction vessel, and 45 g (43 mL) of acrylic acid and 0.45 g of 2,2'-azobis(2,4-dimethylvaleronitrile) were placed in the flask. Further, a solution of 0.50 g of pentaerythritol tetraallyl ether in 213 g (313 mL) of n-hexane was added gently. The separable flask containing the solution was fixed to a four-necked separable cover equipped with a stirrer, a thermometer, a glass tube for nitrogen feeding, and a cooling tube. An agitator was equipped with four inclined paddle blades and an anchor-shaped agitator blade, and the inclined paddle blades were a combination of blades with different lengths.

While the solution prepared in the reaction vessel was stirred and mixed uniformly, nitrogen gas was blown into the solution at room temperature to deoxidize the upper space of the reaction vessel and the solution. After sufficient deoxidization, while the internal temperature of the solution was kept at 44 to 46°C, the slurry generated in the reaction was allowed to react in a nitrogen atmosphere for 4 hours with stirring at a peripheral speed of 0.075 to 0.175 m/min. After the reaction was complete, the generated white slurry was heated to 95 to 105°C to remove n-hexane, and then dried under reduced pressure at 120°C at 4 to 5 mmHg for 8 hours, thereby obtaining 44 g of a white fine powder of a crosslinked polymer of an α,β-unsaturated carboxylic acid compound.

### Example 2

The operation of Example 1 was performed in the same manner, except that 0.38 g of pentaerythritol tetraallyl ether was used, thereby obtaining 43 g of a white fine powder of a crosslinked polymer of an α,β-unsaturated carboxylic acid compound.

### Comparative Example 1

63 g (60 mL) of acrylic acid, 0.44 g of pentaerythritol tetraallyl ether, 0.016 g of azobisisobutyronitrile, and 375 g (300 mL) of ethylene dichloride were placed in a 500-mL four-necked flask equipped with a stirrer, a thermometer, a nitrogen-feeding tube, and a cooling tube. Subsequently, the mixture was uniformly stirred and mixed, and then nitrogen gas was blown into the solution to remove oxygen present in the upper space of the reaction vessel, in the starting materials, and in the solvent. The mixture was then allowed to react for 3 hours while being kept at 70 to 75°C in a nitrogen atmosphere. After the reaction was complete, the generated slurry was heated to 110°C to distill ethylene dichloride, thereby obtaining 63 g of a white fine powder of a crosslinked polymer of an α,β-unsaturated carboxylic acid compound.

### Comparative Example 2

The operation of Comparative Example 1 was performed in the same manner, except that the proportion of the components in a four-necked flask was changed to 57.3 g (54.6 mL) of acrylic acid, 0.66 g of pentaerythritol tetraallyl ether, 0.1 g of azobisisobutyronitrile, and 525 g (420 mL) of ethylene dichloride, and that the reaction temperature was changed to 55 to 60°C, thereby obtaining 58 g of a white fine powder of a crosslinked polymer of an α,β-unsaturated carboxylic acid compound.

### Evaluation of Physical Properties of Crosslinked Polymer Particles of α,β-Unsaturated Carboxylic Acid Compound Measurement with Ubbelohde Dilution Viscometer

A 0.015 mass% neutralized aqueous solution of crosslinked polymer particles of an α,β-unsaturated carboxylic acid compound was also prepared. More specifically, 288.8 g of ion-exchanged water was placed in a 500-mL beaker, and 1.5 g of crosslinked carboxyl group-containing polymer particles were gradually added with stirring at 1500 rpm with a dispersion mixer. After subsequent stirring for 30 minutes, the dispersion mixer was turned off, and 9.7 g of a 6 mass% aqueous sodium hydroxide solution was added, followed by stirring the mixture for 30 seconds with a handheld mixer, thereby obtaining a 0.5 mass% neutralized aqueous solution of crosslinked carboxyl group-containing polymer particles. The neutralized aqueous solution was then further diluted with ion-exchanged water to 0.015 mass%. The 0.015 mass% neutralized aqueous solution was measured for flow time with an Ubbelohde dilution viscometer at 25.0 ± 0.01°C. The Ubbelohde dilution viscometer for use was one with a flow time of 100 to 200 seconds during solvent measurement in accordance with JIS K-7367-1 (Asahi Glassplant Inc. 2B (Cat. No. 4804-09)). The measurement method was performed in accordance with JIS K-7367-1. More specifically, the flow time of the 0.015 mass% neutralized aqueous solution was first measured, and then a predetermined amount of a solvent (water) was further added to dilute the 0.015 mass% solution, followed by measuring the flow time. This operation was performed several times (about 4 to 5 times) to measure the flow time at each concentration. With flow time (t) at each concentration and solvent-only flow time (t₀), ηₛₚ can be determined according to the following relational expression. ηₛₚ is a specific viscosity (indicating the rate of increase in viscosity caused by a solute in a solvent).
*η*ₛₚ = (*η*-*η*₀)/*η*₀ = (*ρ*t-*ρ*₀t₀)/*ρ*₀t₀ ≈ (t-t₀)/t₀ (*ρ*₀: solvent viscosity, t₀: solvent flow time, *ρ*: solution viscosity, t: solution flow time)

Then, the results are plotted with concentration (c) on the horizontal axis and (η_{sp/}c) on the vertical axis. Martin's equation ηₛₚ/c = [η]e^{k[η]c} with exponential approximation gives [η] and k. (Plotting the measured values gives exponential approximation in the Martin's equation. The intercept of the extrapolation of zero concentration is intrinsic viscosity [η].) [η] denotes an intrinsic viscosity, k denotes an interaction coefficient, and k[η] denotes the product of these. The unit for [η] is dl/g.

### Yield Value Measurement

The viscosity of a 0.5 mass% neutralized aqueous solution of crosslinked polymer particles of an α,β-unsaturated carboxylic acid compound was measured with a dynamic viscoelasticity analyzer (rheometer: AR-2000ex from TA Instruments Japan). The steady-state flow viscosity at a shear stress of 1.0 × 10⁻⁵ to 1.0 × 10³ (Pa) was measured by using a 60-mm (diameter), 4-degree cone with the temperature set to 25°C under steady-state conditions that satisfied the following three items: (1) percentage tolerance 1.0, (2) consecutive within tolerance 3, and (3) maximum point time 10 min. The point at which the strain changed abruptly with respect to shear stress was determined to be the yield value (yield stress, Pa).

### Viscosity of 0.5 Mass% Neutralized Aqueous Solution

A 0.5 mass% neutralized aqueous solution of a crosslinked polymer of an α,β-unsaturated carboxylic acid compound, prepared as described above, was measured for viscosity after 60 seconds with a BH rotary viscometer equipped with a No. 7 spindle at 20 rpm at 25°C.

### Preparation of 1.5 Mass% Solution (35% KOHaq.)

197 g of a 35 mass% potassium hydroxide solution was placed in a 500-mL beaker. While the solution was stirred with a four-paddle blade at 300 rpm, 3.0 g of crosslinked carboxyl group-containing polymer particles were gradually added thereto. The mixture was continuously stirred for 3 hours, thereby obtaining a 1.5 mass% solution (35% KOHaq.) of crosslinked polymer particles of an α,β-unsaturated carboxylic acid compound.

### Evaluation of Zinc Powder Dispersibility

100 g of the 1.5 mass% solution (35% KOHaq.) of crosslinked polymer particles of an α,β-unsaturated carboxylic acid compound was placed in a 500-mL beaker. While the solution was stirred with a four-paddle blade at 200 rpm, 180 g of zinc powder was gradually added thereto. The mixture was continuously stirred for 15 minutes, thereby preparing a 1.5 mass% solution (35% KOHaq.) of crosslinked polymer particles of an α,β-unsaturated carboxylic acid compound in which zinc powder was dispersed. This 1.5 mass% solution was for use in a gel cathode of an alkaline battery for testing.

40 g of the gel cathode of an alkaline battery for testing was placed in a 50-mL plastic centrifuge tube and left at room temperature for 14 days. The height of the entire content, including the floating water released from the gel cathode of the alkaline battery for testing, and the height of only the gel cathode of the alkaline battery for testing, excluding the floating water, were individually measured with a caliper, and the retention rate for zinc powder was calculated according to the following formula. A retention rate of zinc powder being 98% or higher indicates that water release from the gel cathode of the alkaline battery for testing was slight, meaning excellent dispersibility (pass). Zinc powder retention rate (%) = height of only gel cathode of alkaline battery for testing (mm)/total height (mm) × 100

Table 1 summarizes the results. The viscosity was measured with a BH rotary viscometer.

**Table 1**

| | | Example | | Comparative Example | |
|---|---|---|---|---|---|
| | | 1 | 2 | 1 | 2 |
| Yield Stress [Pa] | | 28.4 | 22.4 | 9_8 | 15.4 |
| Ubbelohde Dilution Viscometer | [η] | 13.9 | 22.2 | 95_5 | 30.7 |
| | k | 1.52 | 1.54 | 0.96 | 1.23 |
| | k[η] | 21.1 | 34.3 | 91.4 | 37_6 |
| Viscosity [mPa·s] | | 38800 | 56600 | 35600 | 51000 |
| Zinc Powder Retention Rate [%] | | 99 | 98 | 96 | 95 |
| Evaluation of Dispersibility | | Pass | Pass | Fail | Fail |

## Claims

1. A crosslinked polymer of an α,β-unsaturated carboxylic acid compound, the polymer being crosslinked by a crosslinking agent,
wherein
a 0.5 mass% neutralized aqueous solution of the crosslinked polymer at 25°C has a yield stress of 20 Pa or higher, and
k is 1.5 to 3.0 wherein k represents an interaction coefficient as determined by measuring a neutralized aqueous solution of the crosslinked polymer having an initial concentration of 0.015 mass% with an Ubbelohde dilution viscometer.

2. The crosslinked polymer according to claim 1, wherein the α,β-unsaturated carboxylic acid compound is at least one member selected from the group consisting of acrylic acid, methacrylic acid, crotonic acid, maleic acid, fumaric acid, itaconic acid, and salts thereof.

3. The crosslinked polymer according to claim 1, wherein the crosslinking agent is a compound having two or more ethylenically unsaturated groups.

4. The crosslinked polymer according to claim 1, which is a polymer comprising 0.15 to 2 parts by mass of the crosslinking agent per 100 parts by mass of the α,β-unsaturated carboxylic acid compound.

5. A binder for an electrode for an alkaline battery, the binder comprising the crosslinked polymer of any one of claims 1 to 4.

6. The binder according to claim 5, wherein the electrode is a negative electrode.

7. An electrode for an alkaline battery comprising the binder of claim 5.

8. An alkaline battery comprising the electrode of claim 7.

9. A method for producing a polymer of an α,β-unsaturated carboxylic acid compound crosslinked by a crosslinking agent, comprising reacting an α,β-unsaturated carboxylic acid compound and a compound having two or more ethylenically unsaturated groups in an inert solvent at 40 to 48°C in the presence of a radical polymerization catalyst,
wherein
the radical polymerization catalyst is present in an amount of 0.5 to 2 parts by mass per 100 parts by mass of the α,β-unsaturated carboxylic acid compound.
